# EUROPÄISCHE PATENTSCHRIFT

(11) **EP 3 978 932 B1**
(45) Veröffentlichungstag und Bekanntmachung des Hinweises auf die Patenterteilung: **08.11.2023**
(21) Anmeldenummer: 21195425.0
(22) Anmeldetag: 08.09.2021
(51) Int. Cl.: G01P 3/488, G01P 1/12, G01P 21/02

(54) **BEWEGUNGSSENSOR ZUR ERFASSUNG EINER BEWEGUNG EINES BEWEGLICHEN OBJEKTES, SYSTEM MIT EINEM SOLCHEN BEWEGUNGSSENSOR UND VERFAHREN ZUR ÜBERPRÜFUNG EINER MANIPULATION EINES SOLCHEN BEWEGUNGSSENSORS**
MOVEMENT SENSOR FOR DETECTING MOVEMENT OF A MOVING OBJECT, SYSTEM COMPRISING SUCH A MOVEMENT SENSOR AND METHOD FOR CHECKING A MANIPULATION OF SUCH A MOVEMENT SENSOR
CAPTEUR DE MOUVEMENT DESTINÉ À LA DÉTECTION D'UN MOUVEMENT D'UN OBJET EN MOUVEMENT, SYSTÈME DOTÉ D'UN TEL CAPTEUR DE MOUVEMENT ET PROCÉDÉ DE VÉRIFICATION D'UNE MANIPULATION D'UN TEL CAPTEUR DE MOUVEMENT

(30) Priorität: 01.10.2020 DE 102020212426
(43) Veröffentlichungstag der Anmeldung: 06.04.2022
(73) Patentinhaber: Robert Bosch GmbH, 70442 Stuttgart (DE)
(72) Erfinder: Hruby, Jaroslav, 39165 Bechyne (CZ); Vesely, Antonin, 628 00 Brno (CZ); Has, Martin, 37005 Ceske Budejovice (CZ)

(56) Entgegenhaltungen:
- EP-B1- 1 890 116
- EP-B1- 2 195 616
- DE-A1-102013 219 796

## Beschreibung

### Stand der Technik

Im Stand der Technik sind verschiedenartige Bewegungssensoren zur Erfassung einer Bewegung beziehungsweise einer Bewegungsgröße eines beweglichen Objektes, insbesondere eines Kraftfahrzeuges bekannt.

DE 10 2013 219796 A1 offenbart einen Impulsgeber für eine Vorrichtung zur Betriebsdatenerfassung, Getriebeanordnung mit einem Impulsgeber, Tachographenanordnung sowie Verfahren zur Erzeugung eines Ausgabesignals für eine Vorrichtung zur Betriebsdatenerfassung in einem Fahrzeug.

Derartige Sensoren können beispielsweise dazu vorgesehen sein, als Bestandteil eines Fahrtenschreibers oder Tachometers im Kraftfahrzeug Zählimpulse zu erfassen, die durch ein bei einer Bewegung des Kraftfahrzeuges rotierendes Geberrad erzeugt werden, um in Abhängigkeit von den Zählimpulsen eine Bewegungsgröße des Kraftfahrzeuges, wie beispielsweise die Fahrzeuggeschwindigkeit oder die von dem Kraftfahrzeug zurückgelegte Wegstrecke zu erfassen.

Bekannte gängige Bewegungssensoren weisen ein magnetfeldempfindliches Sensorelement auf, durch welches eine Magnetfeldänderung erfasst werden kann. Die Magnetfeldänderung am Ort des Sensorelementes wird durch eine aus einer Bewegung des beweglichen Objektes resultierenden Drehbewegung eines magnetischen Geberrades hervorgerufen. Dies kann beispielsweise ein in einem Magnetfeld rotierendes ferromagnetisches Geberrad oder auch ein Geberrad sein, welches über den Umfang mit alternierenden magnetischen Polen versehen ist. Die Rotation des Geberrades verändert das Magnetfeld am Ort des Sensorelementes, indem Zähne und Zahnlücken durch das Magnetfeld rotieren, so dass das Sensorelement in Abhängigkeit von der Drehbewegung des Geberrades ein Sensorsignal erzeugt. Der Bewegungssensor kann einen elektrischen Ausgang aufweisen, an dem er ein von dem Sensorsignal abhängiges Ausgangssignal bereitstellt.

Obwohl derartige Bewegungssensoren gut erprobt und vielseitig einsetzbar sind, sind sie aufgrund der Verwendung eines magnetfeldempfindlichen Sensorelementes anfällig gegenüber betrügerischen Manipulationsversuchen, welche das Störmagnetfeld eines externen Magneten dazu verwenden, den Bewegungssensor zu manipulieren. Es ist bekannt, dass hierzu beispielsweise der Versuch unternommen werden kann, einen externen Magnet in der Nähe des magnetfeldempfindlichen Sensorelementes anzuordnen. In Abhängigkeit von der Stärke und Position des Störmagnetfeldes erzeugt das durch das Magnetfeld des externen Magneten manipulierte magnetfeldempfindliche Sensorelement bei einer Drehbewegung des Geberrades kein Sensorsignal mehr, so dass die Bewegung des beweglichen Objektes nicht mehr erfasst wird. Auf diese Weise könnten beispielsweise Bewegungsprofile in Fahrtenschreibern manipuliert werden.

Es besteht daher ein Bedürfnis den Bewegungssensor zu überwachen, um gegebenenfalls eine Manipulation nachweisen oder verhindern zu können. Der Gesetzgeber hat hierzu rechtliche Vorschriften erlassen.

### Offenbarung der Erfindung

Die Erfindung betrifft einen Bewegungssensor zur Erfassung einer Bewegung beziehungsweise Bewegungsgröße eines beweglichen Objektes, insbesondere eines Kraftfahrzeuges, nach Anspruch 1.

Weiterhin betrifft die Erfindung ein Verfahren zur Überprüfung einer Manipulation eines solchen Bewegungssensors, bei dem in Abhängigkeit von dem Auftreten eines Störfeldsensor-Ausgangssignal auf eine Manipulation des Bewegungssensors geschlossen wird.

### Vorteile der Erfindung

Der erfindungsgemäße Bewegungssensor mit den Merkmalen des unabhängigen Anspruchs 1 weist den Vorteil auf, dass der Bewegungssensor in zuverlässiger Weise gegen einen Manipulationsversuch mittels eines externen Magnetfeldes geschützt wird. Insbesondere wird eine Früherkennung von möglicher Manipulation oder von möglichem Missbrauch eines intelligenten Fahrtenschreibers erreicht und damit den gesetzlichen Vorgaben entsprochen. Vorteilhaft erfolgt die Überwachung durch einen Störmagnetfeldsensor, der von dem für die Erfassung der Bewegung des beweglichen Objektes verwandten magnetfeldempfindlichen Sensorelement unabhängig ist. Der Störmagnetfeldsensor kann in einfacher und preiswerter Weise in oder an dem Bewegungssensor angeordnet werden. Der Störmagnetfeldsensor kann ein weiteres magnetfeldempfindliches Sensorelement aufweisen, das ein das magnetfeldempfindliche Sensorelement manipulierendes und von dem magnetischen Geberfeld unabhängiges Störmagnetfeld erfasst und ein von dem Störmagnetfeld abhängiges Störfeldsensor-Signal erzeugt. Dieses Störfeldsensor-Signal, beziehungsweise ein von dem Störfeldsensor-Signal abhängiges Störfeldsensor-Ausgangssignal kann in einfacher Weise an dem für die Bereitstellung des Ausgangssignals für die Bewegung vorhandenen Ausgang des Bewegungssensors bereitstellt werden. Ausgang bedeutet in diesem Zusammenhang Bereitstellung an einem für die Signalübertragung verwandten elektrischen Anschluss des Bewegungssensors unabhängig von der Anzahl oder sonstigen Verwendung der Signalübertragungsleitungen. Es kann insbesondere ein kodiertes Störfeldsensor-Ausgangssignal und vorzugsweise ein kryptografisch geschütztes Störfeldsensor-Ausgangssignal am Ausgang des Bewegungssensors bereitgestellt werden.

Vorteilhafte Ausgestaltungen und Weiterbildungen der Erfindung werden durch die in den abhängigen Ansprüchen enthaltenen Merkmale ermöglicht.

Vorteilhaft kann der Störmagnetfeldsensor wenigstens ein Hall-Sensorelement als weiteres magnetfeldempfindliches Sensorelement aufweisen. Hall-Sensorelemente sind zur Erfassung magnetischer Felder bewährt und können preiswert und in einfacher Weise in den Bewegungssensor integriert werden.

Bekannter Weise sind Hall-Sensorelement in Hinblick auf die Erfassung eines Magnetfeldes richtungsabhängig. Da der größte Signalhub durch ein Magnetfeld erreicht wird, dessen magnetischer Feldstärke die Messfläche des Hall-Sensorelementes senkrecht durchdringt, kann ein Magnetfeld dessen Feldlinien parallel zur Messfläche gerichtet sind nur schlecht erfasst werden. Ein Manipulationsversuch des Bewegungssensors mit einem Störmagnetfeld beinhaltet grundsätzlich drei Freiheitsgrade (je nachdem in welcher der drei Raumrichtungen das Störmagnetfeld wirkt). Um eine zuverlässige Erkennung des Störmagnetfeldes unabhängig von dessen Richtung zu gewährleisten, ist daher eine Ausführungsform besonders vorteilhaft, bei welcher der Störmagnetfeldsensor beispielsweise wenigstens drei weitere magnetfeldempfindliche Sensorelemente aufweist, welche dazu ausgebildet sind, die Existenz eines Störmagnetfeldes in jeweils einer von drei Raumrichtungen zu erfassen, wobei jedes magnetfeldempfindliche Sensorelement bei Anwesenheit eines Störmagnetfeldes, das in der von ihm überwachten Raumrichtung wirkt, ein entsprechendes Störfeldsensor-Signal erzeugt. Die drei überwachten Raumrichtungen können vorzugsweise zueinander senkrecht orientiert sein.

Auch wenn die bevorzugte Weiterbildung einen Störmagnetfeldsensor mit wenigstens drei magnetfeldempfindliche Sensorelemente umfasst, kann eine erste Verbesserung gegenüber einem Störmagnetfeldsensor mit nur einem magnetfeldempfindlichen Sensorelement Verbesserung bereits mit nur zwei magnetfeldempfindlichen Sensorelementen erreicht werden, die dazu ausgebildet sind, die Existenz eines Störmagnetfeldes in jeweils einer von zwei Raumrichtungen zu erfassen.

Insbesondere kann der Störmagnetfeldsensor ein 3D-Hall-Sensorelement umfassen, das als diskretes elektronisches Bauelement an dem Bewegungssensor verbaut werden kann. Diese Sensoren sind derart ausgebildet, dass ein Magnetfeld, das in irgendeiner von drei Raumrichtung wirkt, in jedem Fall erfasst wird.

Vorteilhaft ist weiterhin, wenn der Bewegungssensor einen Mikrokontroller aufweist, wobei der Mikrokontroller dazu eingerichtet ist, das Störfeldsensorsignal zu empfangen und ein kodiertes Störfeldsensor-Ausgangssignal bereitzustellen. Der bereits zur Signalaufbereitung des Sensorsignals vorhandene Mikrokontroller kann beispielsweise eine Kodierung des Störfeldsensor-Signals vorteilhaft zusätzlich und unabhängig von der Aufbereitung des Sensorsignals durchführen.

Der Störmagnetfeldsensor kann als diskretes elektrisches Bauelement räumlich entfernt und unabhängig von dem magnetfeldempfindlichen Sensorelement an dem Bewegungssensor angeordnet werden. "Räumlich entfernt" bedeutet in diesem Kontext, dass der Störmagnetfeldsensor einerseits kein intrinsischer Bestandteil des eigentlichen magnetfeldempfindlichen Sensorelementes ist und baulich mit diesem nicht vereint ist, andererseits jedoch so nah an dem magnetfeldempfindlichen Sensorelement angeordnet ist, dass eine zuverlässige Erfassung eines am Ort des magnetfeldempfindlichen Sensorelementes wirkenden Störmagnetfeldes sichergestellt ist.

In einem vorteilhaften Ausführungsbeispiel kann der Bewegungssensor beispielsweise ein Gehäuse und ein endseitig an dem Gehäuse angeordnetes magnetfeldempfindliches Sensorelement aufweisen, wobei in dem Gehäuse eine mit elektronischen Bauelementen versehene Leiterplatte angeordnet ist und der Störmagnetfeldsensor auf der Leiterplatte angeordnet ist. Die zusätzliche Bestückung der ohnehin in dem Bewegungssensor vorhandenen Leiterplatte mit einem Störmagnetfeldsensor ist in einfacher und preiswerter Form durchführbar.

Weiterhin vorteilhaft ist ein System mit einem erfindungsgemäßen Bewegungssensor und mit einer Datenverarbeitungseinrichtung, insbesondere einem Fahrtenschreiber, bei dem der Ausgang des Bewegungssensors elektrisch mit einem Eingang der Datenverarbeitungseinrichtung gekoppelt ist. Die Datenverarbeitungseinrichtung empfängt neben dem Ausgangsignal für die Bewegungsgröße des beweglichen Objektes zusätzlich das Störfeldsensor-Ausgangssignal. Die Datenverarbeitungseinrichtung kann eine elektronische Auswerteschaltung aufweisen, welche zumindest dann, wenn gemäß dem empfangenen Ausgangssignal keine Bewegung des beweglichen Objektes erkannt wurde, jedoch gleichzeitig gemäß dem Störfeldsensor-Ausgangssignal ein aktives Störmagnetfeld erkannt wurde, ein internes Störwarnsignal erzeugt.

Vorteilhaft kann beim Auftreten des internen Störwarnsignals in der Datenverarbeitungseinrichtung eine entsprechende Information in einem auslesbaren elektronischen Speicher der Datenverarbeitungseinrichtung hinterlegt werden. Alternativ oder zusätzlich kann eine Information über den zeitlichen Verlauf des internen Störwarnsignals in dem auslesbaren elektronischen Speicher hinterlegt werden. Weiterhin kann alternativ oder zusätzlich das interne Störwarnsignal dazu verwandt werden, ein optisches oder akustisches Alarmsignal zu erzeugen.

Vorteilhaft ist weiterhin ein Verfahren zur Überprüfung einer Manipulation eines Bewegungssensors der eingangs erwähnten Art, bei dem in Abhängigkeit vom Auftreten eines Störfeldsensor-Ausgangssignal auf eine Manipulation des Bewegungssensors geschlossen wird.

### Kurze Beschreibung der Zeichnungen

Nachfolgend werden mögliche Ausführungsformen der Erfindung unter Bezugnahme auf die beiliegende Zeichnung erläutert. In der Zeichnung zeigen:
- Figur 1: einen schematischen Querschnitt durch einen erfindungsgemäßen Bewegungssensor,
- Figur 2: den Verlauf eines Ausgangssignals eines nicht manipulierten Sensorelementes und des zugehörigen Störfeldsensor-Ausgangssignals,
- Figur 3: den Verlauf eines Ausgangssignals eines manipulierten Sensorelementes und des zugehörigen Störfeldsensor-Ausgangssignals,
- Figur 4: ein Ausführungsbeispiel eines Systems mit dem erfindungsgemäßen Bewegungssensor und einer Datenverarbeitungseinrichtung, insbesondere einem Fahrtenschreiber.

### Ausführungsformen der Erfindung

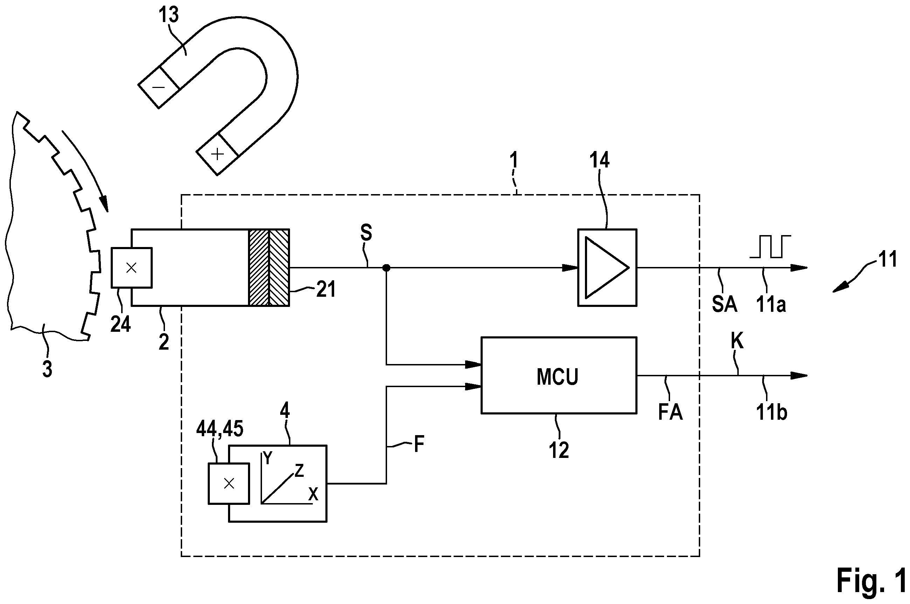

Fig. 1 zeigt einen Bewegungssensor 1 zur Erfassung einer Bewegung eines beweglichen Objektes. Beispielsweise kann es sich bei dem Bewegungssensor um einen Bewegungssensor handeln, der in einem Kraftfahrzeug zur Erfassung der Fahrzeuggeschwindigkeit und/oder der von dem Kraftfahrzeug zurückgelegten Wegstrecke eingesetzt wird. Der Bewegungssensor 1 weist ein magnetfeldempfindliches Sensorelement 2 auf, welches beispielsweise ein Hallsensorelement 24 und einen Magneten 21, dessen Feldlinien das Hallsensorelement 24 durchdringen, umfassen kann. Der Bewegungssensor 1 wird beispielsweise in einem Kraftfahrzeug derart verbaut, dass das magnetfeldempfindliche Sensorelement 2 in der Nähe eines rotierenden Geberrades 3 aus ferromagnetischen Material angeordnet ist. Eine aus der Bewegung des Kraftfahrzeuges resultierende Drehung des Geberrades 3 bewirkt, dass Zähne und Zahnlücken durch das Magnetfeld des Magneten 21 hindurchbewegt werden, wodurch sich die magnetische Flussdichte periodisch verändert. Diese Veränderung wird von dem Hallsensorelement 24 erfasst. Im Ergebnis erzeugt das magnetfeldempfindliche Sensorelement 2 in Abhängigkeit von der Drehbewegung des Geberrades 3 ein Sensorsignal S. Dieses Sensorsignal S kann einer Verstärkungsstufe 14 zugeführt werden und anschließend als Ausgangssignal SA an einer Übergabestelle 11a eines Ausgangs 11 des Bewegungssensors 1 bereitgestellt werden. Weiterhin kann das Sensorsignal S auch alternativ oder zusätzlich einem Mikrokontroller 12 zugeführt werden, welcher aus dem Sensorsignal S ein Kontrollsignal K bildet, das beispielsweise eine Information über die Anzahl der Signalflanken des Sensorsignals S beinhaltet und das als kodiertes und insbesondere als kryptografisch geschütztes Signal an einer zweiten Übergabestelle 11b des Ausgangs 11 des Bewegungssensors 1 bereitstellt werden kann.

Wie in Fig. 1 weiterhin dargestellt ist, weist der Bewegungssensor 1 zusätzlich einen Störmagnetfeldsensor 4 auf. Der Störmagnetfeldsensor 4 weist wenigstens ein weiteres magnetfeldempfindliches Sensorelement 44 auf, welches beispielsweise ein weiteres Hallsensorelement 45 umfassen kann. Aber auch andere Ausgestaltungen sind möglich.

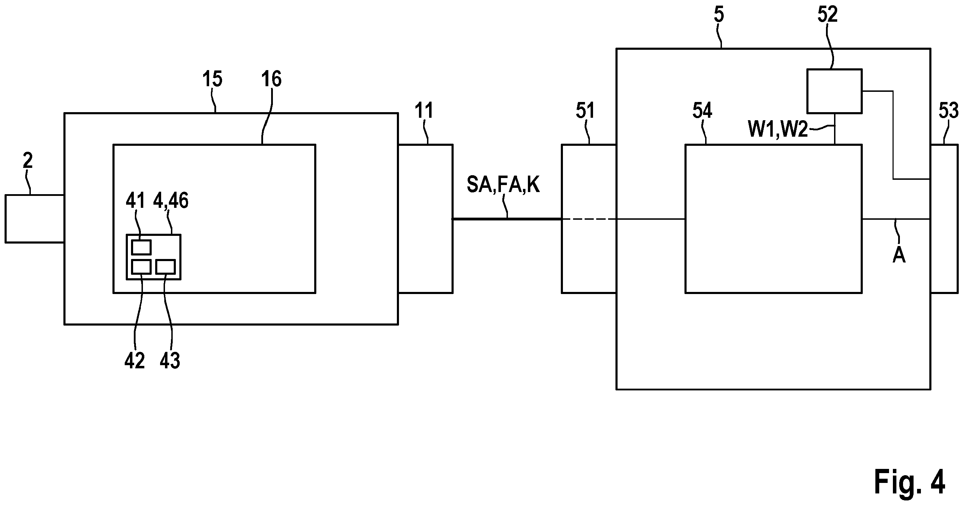

In dem in Fig. 1 und Fig. 4 dargestellten Ausführungsbeispielen, weist der Störmagnetfeldsensor 4 beispielsweise drei weitere magnetfeldempfindliche Sensorelemente 41, 42, 43 (Fig. 4) auf, welche in einem 3D-Hall-Sensorelement 46 (Fig. 4) zusammengefasst sein können. Die drei weiteren magnetfeldempfindlichen Sensorelemente 41, 42, 43 sind dazu ausgebildet, die Existenz eines Störmagnetfeldes in jeweils einer von drei Raumrichtungen x, y, z zu erfassen, vorzugsweise in jeweils einer von drei zueinander senkrechten Raumrichtungen x, y, z zufassen, wobei jedes magnetfeldempfindliche Sensorelement 41, 42, 43 dazu ausgebildet ist, bei Anwesenheit eines Störmagnetfeldes, das in der von ihm überwachten Raumrichtung wirkt, ein entsprechendes Störfeldsensor-Signal Fx, Fy, Fz zu erzeugen.

Wie in Fig. 1 dargestellt ist, muss in Betracht gezogen werden, dass zur Manipulation des Bewegungssensors 1 beispielsweise ein Störmagnet 13 derart in der Nähe des Bewegungssensors 1 verbaut werden könnte, dass sein Magnetfeld das eigentliche magnetfeldempfindliche Sensorelement 2 stört. Dies geschieht, indem das Störmagnetfeld das Magnetfeld des sensorinternen Magneten 21 überlagert und von dem Hallsensorelement 24 kein Signalpegel mehr erfasst werden kann. Das Störmagnetfeld des Störmagneten 13 wird nun aber auch von dem Störmagnetfeldsensor 4 erfasst und zwar unabhängig davon, in welcher Raumrichtung es wirkt. Der Störmagnetfeldsensor 4 in Fig. 1 erzeugt bei einer Anwesenheit des Störmagnetfeldes ein Störfeldsensor-Signal F, welches beispielsweise ebenfalls an den Mikrokontroller 12 übermittelt wird, der es beispielsweise unabhängig von dem Sensorsignal S kodieren kann und als Störfeldsensor-Ausgangssignal FA an der zweiten Übergangsstelle 11b oder einer nicht dargestellten dritten Übergangsstelle des Ausgangs 11 des Bewegungssensors 1 bereitstellen kann.

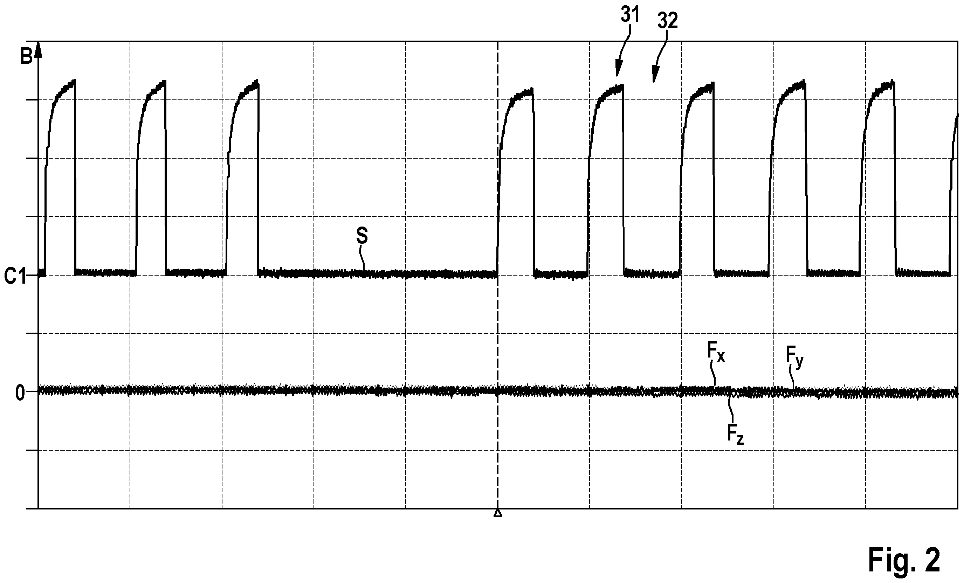

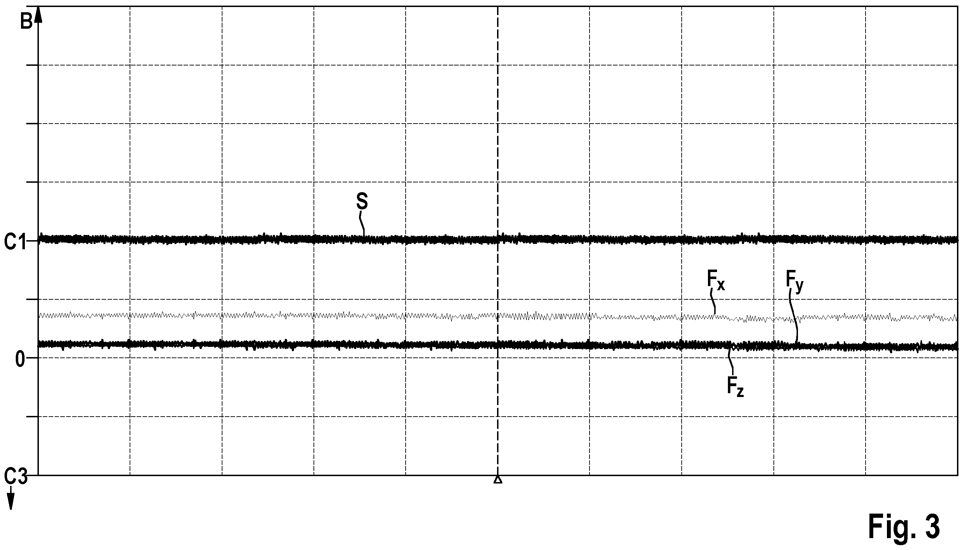

Zum besseren Verständnis sind die Signalverläufe des Bewegungssensors 1 in Fig. 2 und Fig. 3 dargestellt. Zunächst zeigt Fig. 2 den Verlauf des Sensorsignals S für den Normalfall, bei dem kein Störmagnetfeld vorhanden ist. In Fig. 2 ist auf der Ordinate die magnetische Flussdichte B und auf der Abszisse die Zeit aufgetragen. Wenn Zähne und Zahnlücken das magnetfeldempfindliche Sensorelement 2 passieren, wird das Magnetfeld verändert und das Sensorsignal S weist entsprechende Signalspitzen 31 auf, denen Signaltäler 32 folgen. Die Differenz zwischen den Signalspitzen 31 und den Signaltälern 32 bildet den Signalhub. Aus dem zeitlichen Auftreten der Signalspitzen 31 kann im ordnungsgemäßen Betrieb des Bewegungssensors 1 auf die Rotation des Geberrades 3 und daher auf die Bewegungsgröße des damit gekoppelten beweglichen Objektes geschlossen werden. Das heißt der Bewegungssensor 1 liefert in diesem Fall ein korrektes Ausgangssignal SA. Die drei weiteren magnetfeldempfindlichen Sensorelemente 41, 42, 43 des Störmagnetfeldsensors 4 liefern in diesem Fall korrekt als Störfeldsensor-Signal Fx, Fy beziehungsweise Fz jeweils den Wert Null oder fast Null, da kein Störmagnetfeld vorhanden ist.

Fig. 3 zeigt die gleiche Situation des Bewegungssensors 1 für den manipulierten Fall. In diesem Fall verhindert der Störmagnet 13 wie oben erläutert, dass das magnetfeldempfindliche Sensorelement 2 ein ordnungsgemäßes Sensorsignal S liefert. Das Sensorsignal S des gestörten magnetfeldempfindlichen Sensorelementes 2 in Fig. 3 weist keinen periodischen Signalhub mehr auf. Eine Bewegungserfassung des Geberrades 3 ist daher nicht mehr möglich. Jedoch liefert der Störmagnetfeldsensor 4 beziehungsweise dessen drei weiteren magnetfeldempfindlichen Sensorelemente 41, 42, 43 in Fig. 3 in diesem Fall ein von Null verschiedenes Störfeldsensorsignal Fx, Fy, Fz, an dem die Manipulation erkennbar ist. Wie in Fig. 3 im Vergleich zu Fig. 2 zu erkennen ist, sind die Störfeldsensorsignale Fy, Fz etwas größer als Null, während das Störfeldsensorsignal Fx deutlich größer als Null ist. Aus der Abweichung von Null kann auf den Manipulationsfall geschlossen werden. Aus den Signalverläufen in Fig. 3 ist zusätzlich erkennbar, dass das Störmagnetfeld überwiegend in x-Richtung wirkt. In diesem Falls wird also nicht nur die Anwesenheit, sondern auch die Richtung des Störmagnetfeldes durch den Störmagnetfeldsensor 4 eindeutig erkannt.

Der linke Teil von Fig. 4 zeigt eine Ausführungsform des Bewegungssensors 1, bei welcher der Bewegungssensor 1 ein Gehäuse 15 und ein endseitig an dem Gehäuse 15 angeordnetes magnetfeldempfindliches Sensorelement 2 aufweist. Das Sensorelement 2 kann mit einer Leiterplatte 16 im Inneren des Gehäuses 15 elektrisch verbunden sein, auf der sich als elektronische Bauelemente unter anderem beispielswiese der Mikrokontroller 12 und der Verstärker 14 befinden können. Der elektrische Ausgang 11 der Signalleitungen kann beispielsweise durch einen an dem Gehäuse angeordneten Steckanschluss oder in ähnlicher Weise ausgebildet sein. Der Störmagnetfeldsensor 4 kann in diesem Ausführungsbeispiel beispielsweise auf der Leiterplatte 16 angeordnet sein. Grundsätzlich kann der Störmagnetfeldsensor 4 jedoch auch an einer anderen Stelle angeordnet werden. Der Störmagnetfeldsensor 4 kann insbesondere als diskretes elektrisches Bauelement räumlich entfernt und unabhängig von dem magnetfeldempfindlichen Sensorelement 2 an dem Bewegungssensor 1 angeordnet werden. Nähe ist dabei nur insoweit erforderlich, als die Anwesenheit des am Ort des Sensorelementes 2 wirkenden Störmagnetfeldes noch zuverlässig erfasst werden sollte.

Der Bewegungssensor 1 kann mit einer Datenverarbeitungseinrichtung 5 beispielsweise einem Fahrtenschreiber eines Kraftfahrzeuges elektrisch verbunden werden, wie dies in Fig. 4 dargestellt ist. Die Datenverarbeitungseinrichtung 5 kann beispielsweise eine elektronische Auswerteschaltung 54 aufweisen. Wie in Fig. 4 gezeigt, kann der Ausgang 11 des Bewegungssensors 1 elektrisch mit einem Eingang 51 der Datenverarbeitungseinrichtung 5 gekoppelt werden, so dass das die Datenverarbeitungseinrichtung 5 das Ausgangsignal SA des Sensorelementes 2, das Kontrollsignal K und das Störfeldsensor-Ausgangssignal FA empfängt. Das Kontrollsignal K dient beispielsweise zur Plausibilisierung der Signalerfassung des Ausgangssignals SA. Da das Kontrollsignal K eine Information über das Ausgangssignal SA beinhaltet (nämlich die Anzahl der Signalflanken) kann mittels des Kontrollsignals K in der Auswerteschaltung eine Überprüfung des Ausgangssignals SA erfolgen.

Wichtig ist, dass die Datenverarbeitungseinrichtung 5 aus dem empfangenen Störfeldsensor-Ausgangssignal FA grundsätzlich auf den Störfall beziehungsweise eine betrügerische Manipulation schließen kann. Insbesondere dann, wenn in der Datenverarbeitungseinrichtung 5 gemäß dem empfangenen Ausgangssignal SA keine Bewegung des beweglichen Objektes erkannt wird (das Fahrzeug also eigentlich stehen müsste), jedoch gleichzeitig gemäß dem Störfeldsensor-Ausgangssignal FA ein aktives Störmagnetfeld erkannt wird, kann die Datenverarbeitungseinrichtung 5 beispielsweise ein internes Störwarnsignal W erzeugen.

Auch bei der in Fig. 3 dargestellten Situation, bei dem zumindest eines oder mehrere der drei verschieden Störfeldsensorsignale Fx, Fy, Fz deutlich von Null verschieden sind, kann also die Datenverarbeitungseinrichtung 5 beispielsweise ein internes Störwarnsignal W erzeugen. Bei Auftreten des internen Störwarnsignals W kann die Datenverarbeitungseinrichtung 5 eine entsprechende Information W1 über das Auftreten in einem auslesbaren elektronischen Speicher 52 der Datenverarbeitungseinrichtung hinterlegen. Vorzugsweise kann die Datenverarbeitungseinrichtung eine Information über den zeitlichen Verlauf W2 des internen Störwarnsignals W2 in dem auslesbaren elektronischen Speicher 52 hinterlegen. Der Speicher 52 ist beispielsweise zum Nachweis der Manipulation über eine Schnittstelle 53 der Datenverarbeitungseinrichtung 5 auslesbar. Alternativ oder zusätzlich kann die Datenverarbeitungseinrichtung 5 in Abhängigkeit von dem Störwarnsignal W auch ein entsprechendes optisches oder akustisches Alarmsignal A erzeugen und an der Schnittstelle 53 bereitstellen. Das Alarmsignal kann zur Ansteuerung eines optischen oder akustischen Warnsignalgebers verwandt werden.

## Patentansprüche

1. Bewegungssensor (1) zur Erfassung einer Bewegung eines beweglichen Objektes, insbesondere eines Kraftfahrzeuges, wobei der Bewegungssensor (1) zumindest ein magnetfeldempfindliches Sensorelement (2) aufweist, durch welches eine Magnetfeldänderung erfasst werden kann, wobei die Magnetfeldänderung am Ort des Sensorelementes (2) durch eine aus einer Bewegung des beweglichen Objektes resultierenden Drehbewegung eines Geberrades (3) hervorgerufen wird und das Sensorelement (2) in Abhängigkeit von der Drehbewegung des Geberrades (3) ein Sensorsignal (S) erzeugt und der Bewegungssensor (1) wenigstens ein von dem Sensorsignal (S) abhängiges Ausgangssignal (SA) an einem Ausgang (11) des Bewegungssensors (1) bereitstellt, wobei der Bewegungssensor (1) einen Störmagnetfeldsensor (4) aufweist, wobei der Störmagnetfeldsensor (4) wenigstens ein weiteres magnetfeldempfindliches Sensorelement (44) aufweist, wobei das weitere magnetfeldempfindliche Sensorelement (44) dazu ausgebildet ist, ein das magnetfeldempfindliche Sensorelement (2) manipulierendes und von dem magnetischen Geberfeld unabhängiges Störmagnetfeld zu erfassen und ein von dem Störmagnetfeld abhängiges Störfeldsensor-Signal (F) zu erzeugen, und der Bewegungssensor (1) wenigstens ein von dem Störfeldsensor-Signal (F) abhängiges Störfeldsensor-Ausgangssignal (FA) an dem Ausgang (11) des Bewegungssensors (1) bereitstellt, **dadurch gekennzeichnet, dass** der Störmagnetfeldsensor (4) wenigstens zwei und insbesondere drei weitere magnetfeldempfindliche Sensorelemente (41, 42, 43) aufweist, welche dazu ausgebildet sind, die Existenz eines Störmagnetfeldes in jeweils einer von zwei und insbesondere jeweils einer von drei Raumrichtungen (x, y, z) zu erfassen, wobei jedes magnetfeldempfindliche Sensorelement (41, 42, 43) bei Anwesenheit eines Störmagnetfeldes, das in der von ihm überwachten Raumrichtung wirkt, ein entsprechendes Störfeldsensor-Signal (Fx, Fy, Fz) erzeugt.

2. Bewegungssensor nach Anspruch 1, **dadurch gekennzeichnet, dass** der Störmagnetfeldsensor (4) wenigstens ein Hall-Sensorelement (45) als weiteres magnetfeldempfindliches Sensorelement (44) aufweist.

3. Bewegungssensor nach Anspruch 1, **dadurch gekennzeichnet, dass** der Störmagnetfeldsensor (4) ein 3D-Hall-Sensorelement (46) umfasst.

4. Bewegungssensor nach Anspruch 1, **dadurch gekennzeichnet, dass** der Bewegungssensor (1) einen Mikrokontroller (12) aufweist, wobei der Mikrokontroller (12) dazu eingerichtet ist, das Störfeldsensorsignal (F) zu empfangen und ein kodiertes Störfeldsensor-Ausgangssignal (FA) bereitzustellen.

5. Bewegungssensor nach einem der vorstehenden Ansprüche, **dadurch gekennzeichnet, dass** der Störmagnetfeldsensor (4) als diskretes elektrisches Bauelement räumlich entfernt und unabhängig von dem magnetfeldempfindlichen Sensorelement (2) an dem Bewegungssensor (1) angeordnet ist.

6. Bewegungssensor nach einem der vorstehenden Ansprüche, **dadurch gekennzeichnet, dass** der Bewegungssensor (1) ein Gehäuse (15) und ein endseitig an dem Gehäuse (15) angeordnetes magnetfeldempfindliches Sensorelement (2) aufweist, wobei in dem Gehäuse (15) eine mit elektronischen Bauelementen versehene Leiterplatte (16) angeordnet ist und der Störmagnetfeldsensor (4) auf der Leiterplatte (16) angeordnet ist.

7. System mit einem Bewegungssensor (1) nach einem der Ansprüche 1 bis 6 und einer Datenverarbeitungseinrichtung (5), insbesondere einem Fahrtenschreiber, wobei der Ausgang (11) des Bewegungssensors (1) elektrisch mit einem Eingang (51) der Datenverarbeitungseinrichtung (5) gekoppelt ist, so dass die Datenverarbeitungseinrichtung (5) das Ausgangsignal (SA) und das Störfeldsensor-Ausgangssignal (FA) empfängt, und dass die Datenverarbeitungseinrichtung (5) zumindest dann, wenn gemäß dem empfangenen Ausgangssignal (SA) keine Bewegung des beweglichen Objektes erkannt wurde, jedoch gleichzeitig gemäß dem Störfeldsensor-Ausgangssignal (FA) ein aktives Störmagnetfeld erkannt wurde, ein internes Störwarnsignal (W) erzeugt.

8. System nach Anspruch 7, **dadurch gekennzeichnet, dass** die Datenverarbeitungseinrichtung (5) bei Auftreten des internen Störwarnsignals (W) eine entsprechende Information (W1) in einem auslesbaren elektronischen Speicher (52) der Datenverarbeitungseinrichtung (5) hinterlegt und/oder vorzugsweise eine Information über den zeitlichen Verlauf (W2) des internen Störwarnsignals (W) in dem auslesbaren elektronischen Speicher (52) hinterlegt und/oder ein entsprechendes optisches oder akustisches Alarmsignal (A) erzeugt.

9. Verfahren zur Überprüfung einer Manipulation eines Bewegungssensors (1) nach einem der Ansprüche 1 bis 6, **dadurch gekennzeichnet, dass** in Abhängigkeit von dem Auftreten eines Störfeldsensor-Ausgangssignal (FA) auf eine Manipulation des Bewegungssensors (1) geschlossen wird.

## Claims

1. Motion sensor (1) for detecting movement of a moving object, in particular of a motor vehicle, wherein the motion sensor (1) has at least one magnetic-field-sensitive sensor element (2) which can detect a change in magnetic field, wherein the change in magnetic field at the location of the sensor element (2) is caused by rotation of a sensor wheel (3) resulting from movement of the moving object and the sensor element (2) generates a sensor signal (S) on the basis of the rotation of the sensor wheel (3) and the motion sensor (1) provides, at an output (11) of the motion sensor (1), at least one output signal (SA) based on the sensor signal (S), wherein the motion sensor (1) has an interference magnetic field sensor (4), wherein the interference magnetic field sensor (4) has at least one further magnetic-field-sensitive sensor element (44), wherein the further magnetic-field-sensitive sensor element (44) is designed to detect an interference magnetic field that is manipulating the magnetic field-sensitive sensor element (2) and that is independent of the magnetic sensor field and to generate an interference field sensor signal (F) based on the interference magnetic field, and the motion sensor (1) provides, at the output (11) of the motion sensor (1), at least one interference field sensor output signal (FA) based on the interference field sensor signal (F), **characterized in that** the interference magnetic field sensor (4) has at least two and in particular three further magnetic-field-sensitive sensor elements (41, 42, 43) which are designed to detect the existence of an interference magnetic field in each one of two and in particular in each one of three spatial directions (x, y, z), wherein each magnetic-field-sensitive sensor element (41, 42, 43) generates a corresponding interference field sensor signal (Fx, Fy, Fz) in the presence of an interference magnetic field acting in the spatial direction monitored by said magnetic-field-sensitive sensor element.

2. Motion sensor according to Claim 1, **characterized in that** the interference magnetic field sensor (4) has at least one Hall sensor element (45) as the further magnetic-field-sensitive sensor element (44).

3. Motion sensor according to Claim 1, **characterized in that** the interference magnetic field sensor (4) comprises a 3D Hall sensor element (46).

4. Motion sensor according to Claim 1, **characterized in that** the motion sensor (1) has a microcontroller (12), wherein the microcontroller (12) is configured to receive the interference field sensor signal (F) and to provide an encoded interference field sensor output signal (FA).

5. Motion sensor according to one of the preceding claims, **characterized in that** the interference magnetic field sensor (4) is arranged on the motion sensor (1) as a discrete electrical component that is physically remote from and independent of the magnetic-field-sensitive sensor element (2).

6. Motion sensor according to one of the preceding claims, **characterized in that** the motion sensor (1) has a housing (15) and a magnetic-field-sensitive sensor element (2) arranged at one end of the housing (15), wherein a printed circuit board (16) provided with electronic components is arranged in the housing (15) and the interference magnetic field sensor (4) is arranged on the printed circuit board (16).

7. System having a motion sensor (1) according to one of Claims 1 to 6 and a data processing device (5), in particular a tachograph, wherein the output (11) of the motion sensor (1) is electrically coupled to an input (51) of the data processing device (5) such that the data processing device (5) receives the output signal (SA) and the interference field sensor output signal (FA), and that the data processing device (5) generates an internal interference warning signal (W) at least when the received output signal (SA) indicates that no movement of the moving object has been detected but at the same time the interference field sensor output signal (FA) indicates that an active interference magnetic field has been detected.

8. System according to Claim 7, **characterized in that**, when the internal interference warning signal (W) occurs, the data processing device (5) stores corresponding information (W1) in a readable electronic memory (52) of the data processing device (5) and/or preferably stores information about the time characteristic (W2) of the internal interference warning signal (W) in the readable electronic memory (52) and/or generates a corresponding visual or audible alarm signal (A).

9. Method of checking for manipulation of a motion sensor (1) according to one of Claims 1 to 6, **characterized in that** manipulation of the motion sensor (1) is inferred on the basis of the occurrence of an interference field sensor output signal (FA).

## Revendications

1. Capteur de mouvement (1) destiné à détecter un mouvement d'un objet mobile, notamment d'un véhicule automobile, le capteur de mouvement (1) comportant au moins un élément capteur (2) qui est magnéto-sensible et qui peut détecter une variation de champ magnétique, la variation du champ magnétique à l'emplacement de l'élément capteur (2) étant provoquée par un mouvement de rotation d'une roue de transmetteur (3) qui résulte d'un mouvement de l'objet mobile, et l'élément capteur (2) générant un signal de capteur (S) en fonction du mouvement de rotation de la roue de transmetteur (3) et le capteur de mouvement (1) fournissant au moins un signal de sortie (SA), dépendant du signal de capteur (S), à une sortie (11) du capteur de mouvement (1), le capteur de mouvement (1) comportant un capteur de champ magnétique interférentiel (4), le capteur de champ magnétique interférentiel (4) comportant au moins un autre élément capteur magnéto-sensible (44), l'autre élément capteur magnéto-sensible (44) étant conçu pour détecter un champ magnétique interférentiel qui manipule l'élément capteur magnéto-sensible (2) et qui est indépendant du champ magnétique du transmetteur et pour générer un signal de capteur de champ interférentiel (F) en fonction du champ magnétique interférentiel, et le capteur de mouvement (1) fournissant à la sortie (11) du capteur de mouvement (1) au moins un signal de sortie de capteur de champ interférentiel (FA) dépendant du signal de capteur de champ interférentiel (F), **caractérisé en ce que** le capteur de champ magnétique interférentiel (4) comporte au moins deux, en particulier trois, autres éléments capteurs magnéto-sensibles (41, 42, 43) qui sont conçus pour détecter l'existence d'un champ magnétique interférentiel suivant l'une des deux, et notamment suivant l'une des trois, directions spatiales (x, y, z), chaque élément capteur magnéto-sensible (41, 42, 43) générant un signal de capteur de champ interférentiel correspondant (Fx, Fy, Fz) en présence d'un champ magnétique interférentiel qui agit dans la direction spatiale qu'il surveille.

2. Capteur de mouvement selon la revendication 1, **caractérisé en ce que** le capteur de champ magnétique interférentiel (4) comporte au moins un élément de capteur à effet Hall (45) comme autre élément capteur magnéto-sensible (44).

3. Capteur de mouvement selon la revendication 1, **caractérisé en ce que** le capteur de champ magnétique interférentiel (4) comprend un élément capteur à effet Hall 3D (46).

4. Capteur de mouvement selon la revendication 1, **caractérisé en ce que** le capteur de mouvement (1) comporte un microcontrôleur (12), le microcontrôleur (12) étant conçu pour recevoir le signal de capteur de champ interférentiel (F) et pour fournir un signal de sortie codé de capteur de champ interférentiel (FA).

5. Capteur de mouvement selon l'une des revendications précédentes, **caractérisé en ce que** le capteur de champ magnétique (4) est disposé sur le capteur de mouvement (1) sous la forme d'un composant électrique discret spatialement à distance et indépendamment de l'élément capteur magnéto-sensible (2) .

6. Capteur de mouvement selon l'une des revendications précédentes, **caractérisé en ce que** le capteur de mouvement (1) comporte un boîtier (15) et un élément capteur magnéto-sensible (2) disposé du côté extrémité sur le boîtier (15), une carte de circuit imprimé (16) pourvue de composants électroniques étant disposée dans le boîtier (15) et le capteur de champ magnétique interférentiel (4) étant disposé sur la carte de circuit imprimé (16).

7. Système comprenant un capteur de mouvement (1) selon l'une des revendications 1 à 6 et un dispositif de traitement de données (5), notamment un tachygraphe, la sortie (11) du capteur de mouvement (1) étant couplée électriquement à une entrée (51) du dispositif de traitement de données (5) de sorte que le dispositif de traitement de données (5) reçoive le signal de sortie (SA) et le signal de sortie de capteur de champ interférentiel (FA), et que le dispositif de traitement de données (5) génère un signal d'avertissement d'interférence interne (W) au moins lorsqu'aucun mouvement de l'objet mobile n'a été détecté conformément au signal de sortie reçu (SA), mais qu'un champ magnétique interférentiel actif a été détecté dans le même temps conformément au signal de sortie de capteur de champ interférentiel (FA).

8. Système selon la revendication 7, **caractérisé en ce que**, lorsque le signal d'avertissement d'interférence interne (W) apparaît, le dispositif de traitement de données (5) stocke une information correspondante (W1) dans une mémoire électronique lisible (52) du dispositif de traitement de données (5) et/ou de préférence stocke une information sur la variation dans le temps (W2) du signal d'avertissement d'interférence interne (W) dans la mémoire électronique lisible (52) et/ou génère un signal d'alarme optique ou acoustique correspondant (A).

9. Procédé de surveillance d'une manipulation d'un capteur de mouvement (1) selon l'une des revendications 1 à 6, **caractérisé en ce qu'**une manipulation du capteur de mouvement (1) est déduite en fonction de l'apparition d'un signal de sortie du capteur de champ interférentiel (FA).
